# EUROPEAN PATENT SPECIFICATION

(11) **EP 3 095 519 B1**
(45) Date of publication and mention of the grant of the patent: **04.10.2017**
(21) Application number: 16169950.9
(22) Date of filing: 17.05.2016
(51) Int. Cl.: B02C 18/00, A01G 1/12, B02C 18/14, B02C 18/22

(54) **SHREDDER-ASPIRATOR INTEGRATED DEVICE**
INTEGRIERTE SHREDDER-ABSAUGER-VORRICHTUNG
DISPOSITIF INTÉGRÉ BROYEUR-ASPIRATEUR

(30) Priority: 18.05.2015 IT UB20150742
(43) Date of publication of application: 23.11.2016
(60) Divisional application: 17161934.9
(73) Proprietor: Coral Finservice S.p.A., 10121 Torino (IT)
(72) Inventor: CORAL, Claudio, 10121 Torino (IT)
(74) Representative: Di Sciuva, Michele

(56) References cited:
- US-A- 3 712 353
- US-A- 5 240 188

## Description

The present invention relates to a shredder-aspirator integrated device, in particular to a shredder-aspirator integrated device for gardening.

There are known brush cutters for gardening comprising a motor, a shaft which is driven by the engine and a shredder seated on the shaft and usually provided with rotating blades. The shredders make it possible to cut grass or crush small branches or other plant debris.

The shredded organic material usually remains in the location where the shredding devices are operating or is scattered around the workplace due to the rotation of the shredder blades. Normally, therefore, an aspiration phase follows which is generally carried out by means of manual collection of the shredded organic material.

It is therefore necessary to carry out a further aspiration after the shredding phase, i.e. manual collection, with consequent loss of time and performance of operations which are not very easy for the operator.

There is therefore a need to optimise the shredding and aspiration operations, in order to make these operations easier and quicker.

There is also a need to carry out the above operations by means of a device which is compact and economical.

US-A-5240188 and US-A-3712353 describe a shredder-aspirator device according to the preamble of claim 1.

The objective of the present invention is to provide a shredder-aspirator integrated device, which makes it possible to meet at least one of the abovementioned requirements.

The above objective is achieved by a shredder-aspirator integrated device according to claim 1.

For a better understanding of the present invention a preferred embodiment is now described, as a non-limiting example, with reference to the accompanying drawings, wherein:
Figure 1 is an exploded and partially-sectioned perspective view of a shredder-aspirator integrated device according to the teachings of the present invention, with parts removed for clarity;
Figure 2 is a partially exploded perspective and partially sectioned view of the device of figure 1, with parts removed for clarity;
Figure 3 is an assembled view of the device of figure 1, with parts removed for clarity;
Figure 4 shows in a front view in particularly enlarged scale some of the components of the device of figures 1 to 3;
Figure 5 is a perspective view of a portable unit comprising the shredder-aspirator integrated device according to the invention; and
Figures 6 and 7 are partially sectioned views from above and from below of the portable unit of figure 5, with parts removed for clarity.

With reference to the attached figures, the reference number 1 designates a shredder-aspirator integrated device for shredding and aspirating organic gardening material, for example leaves and small diameter twigs.

The device 1 essentially comprises a suction hood 2 and a shredder 3 housed inside said hood 2.

The suction hood 2 is, in the example shown, made from moulded or sheet metal.

Beneficially, the device 1 comprises:
- an aspirating mouth 6 suitable for aspirating organic material;
- a fan 10 rotational about an axis A, which can be driven to generate an air flow suitable for conveying organic garden material from the aspirating mouth 6 towards the shredder 3; and
- a drive 12 connectable to a motor and operatively connected to the fan 10 and the shredder 3.

The device 1 also comprises an aspirator 4 housed above said hood 2 and a blower 5 housed laterally with respect to said hood 2.

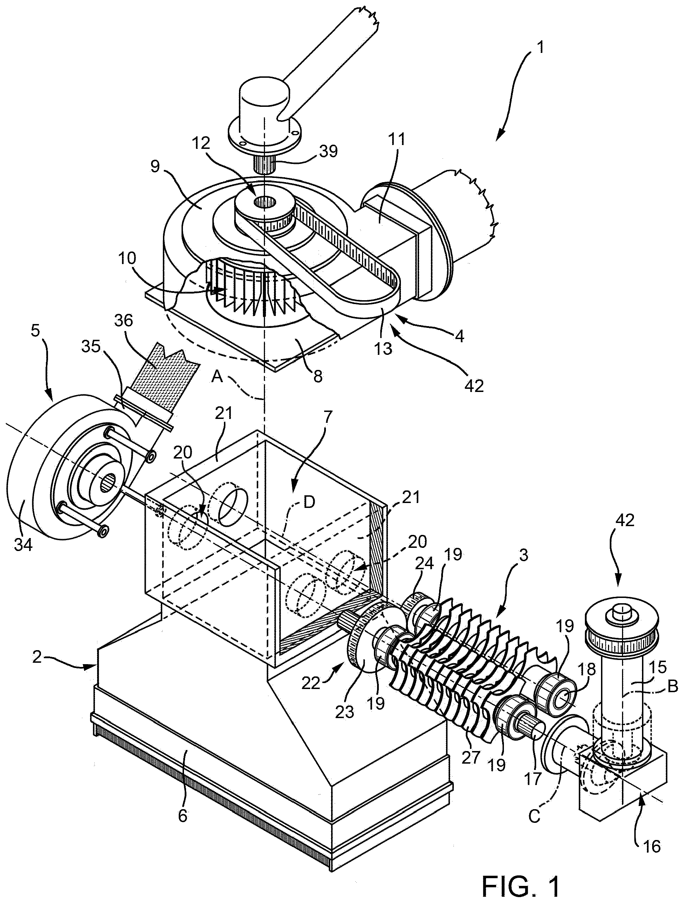

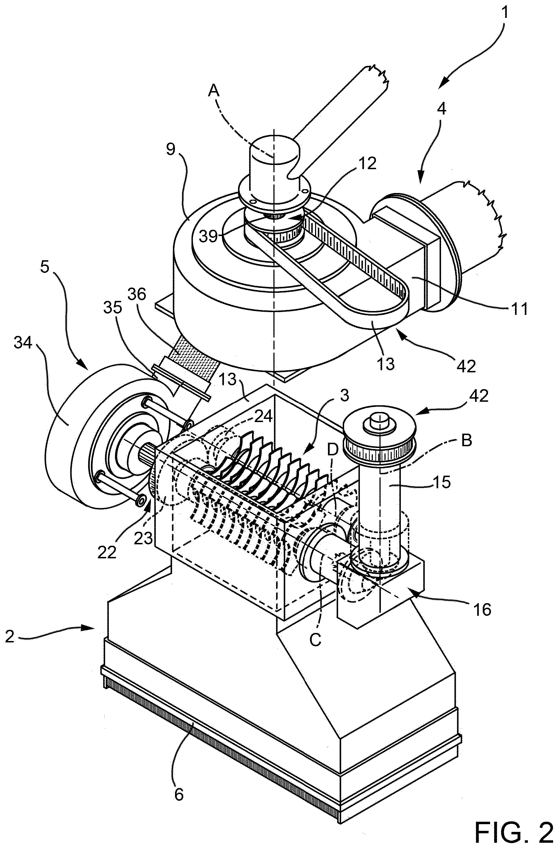

The hood 2 comprises at its first, lower end, with reference to Figures 1 and 2, the aspirating mouth 6, and narrows, tapering to define at a second, upper end, with reference to Figures 1 and 2, a chamber 7 of substantially prismatic shape.

The aspirator 4 is housed on the opposite side of the chamber 7 with respect to the aspirating mouth 6.

The aspirator 4 comprises: a plate 8 suitable to close the chamber 7 on the opposite side to the aspirating mouth 6, an involute cylindrical chamber 9 integral or resting on the plate 8, and the fan 10 housed in rotary manner inside the involute cylindrical chamber 9 and an outlet mouth 11.

The outlet mouth 11 is tangential to the involute cylindrical chamber 9 and integral therewith, preferably in one piece with it and is suitable to allow the exit of the air flow generated by the fan 10 towards a collecting container 14, for example, a fabric filter bag.

The fan 10 is conveniently driven by the rotating element around the axis A, in turn supported in a rotationally free means by the cylindrical portion 9 and angularly integral to the drive 12 configured to receive an input torque from an external motor device.

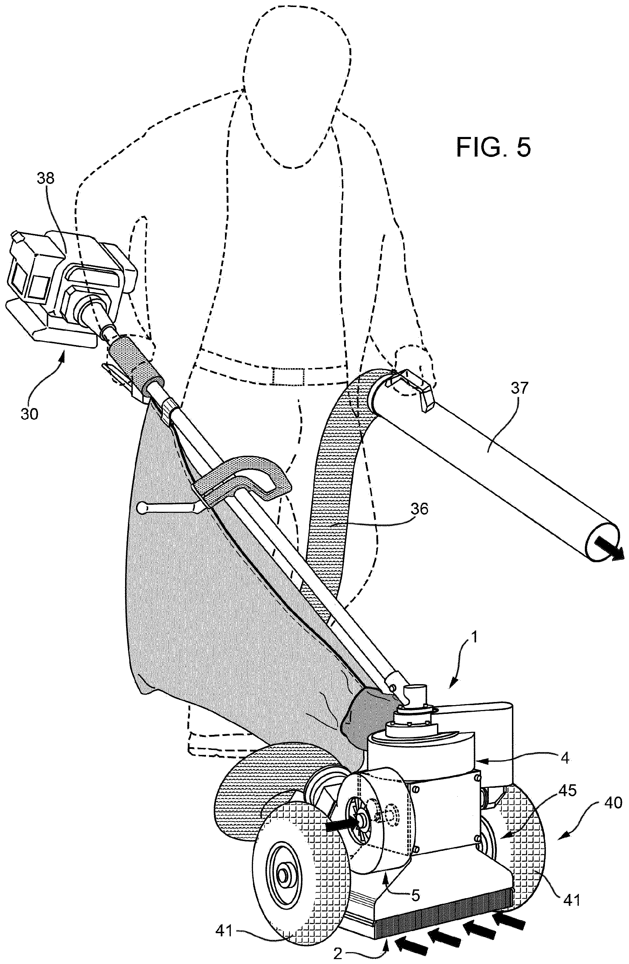

The drive 12 preferably (Figure 5) receives the input torque from an output shaft 39 (Figure 1) of a traditional brush cutter 30.

The output shaft 39 is, in turn, rotationally driven by a motor 38, preferably of the internal combustion or electric type, carried by the brush cutter 30.

The device 1 also comprises a transmission assembly 42, which is interposed between the drive 12 and the shredder 3.

The fan 10 is connected to the drive 12 independently from the transmission assembly 42.

More precisely, the transmission assembly 42 comprises:
a belt 13, which is wound on a pulley angularly integral to the drive 12 about axis A;
a shaft 15, which comprises a first axial end operatively connected to the belt 13 and rotatable about an axis B parallel to and offset with respect to the axis A and positioned beside the extractor hood 2 on the opposite side to the aspirator 4; and
a gear 16 interposed between a second axial end, opposite the first axial end of the shaft 15 and the shredder 3.

In particular, the gear 16 has bevelled cogs and comprises, for example, a bevelled driving cog carried integrally on shaft 15 at the second axial end and a bevelled cog which meshes with the bevelled driving cog.

The shredder 3 comprises a shaft 17 and a shaft 18, each rotating about respective axes C and D which are mutually parallel and perpendicular to the axes A and B. The shaft 17 is operatively connected to the shaft 15 by means of the bevelled cog of the gear 16.

The shafts 17, 18 are supported in a rotationally free manner by means of respective pairs of bearings 19 housed at each end in respective openings 20 formed in the side walls 21 of the chamber 7.

The shafts 17 and 18 extend along respective axes C and D beyond the side wall 21 to which the blower 5 is attached and are operatively connected at their ends by means of a gear 22. The gear 22 comprises, for example, a cog 23 carried integrally by the shaft 17 and a cog 24 carried integrally by the shaft 18.

The cogs 23, 24 have a different number of teeth with respect to each other so that the speed of rotation of the shaft 18 about the axis D is different compared to the speed of the shaft 17 about the axis C. In the present embodiment, for example, the cog 23 has a greater number of teeth than cog 24 so that the speed of rotation of the shaft 18 is greater than that of the shaft 17.

The shafts 17, 18 each carry a plurality of coaxial and rigidly coupled blades 27 mutually equally spaced by means of a series of spacers 25 interposed between them along the shafts 17, 18. The series of blades 27 and spacers 25 is made integral with the respective shaft 17, 18 by means of an axial force applied to one end of the series of blades 27 and spacers 25 by means of a nut 28 which is screwed onto the respective shaft 17, 18 against the end of the series itself.

The axial force exerted by each nut 28 is offloaded against a respective projection 26 located at the opposite end of the series of blades 27 and spacers 25 and integral with one of the respective shafts 17, 18, for example of one piece with it.

In particular, each projection 26 protrudes radially with respect to the axis C, D of the corresponding shaft 17, 18.

The series of blades 27 and spacers 25 is thus rigidly held integral with the respective shaft 17, 18 by means of the friction that is generated between each blade 27 and each spacer 25 due to the axial compressive force of nut 28 against the radial projection 26.

The spacers 25 are substantially hollow cylinders which are suitable to be fitted on the shafts 17, 18. The blades 27 comprise a ring 29 suitable to be fitted onto the shafts 17, 18 and a plurality of spokes 31 in one piece with the ring 29, for example four in number and arranged as a cross.

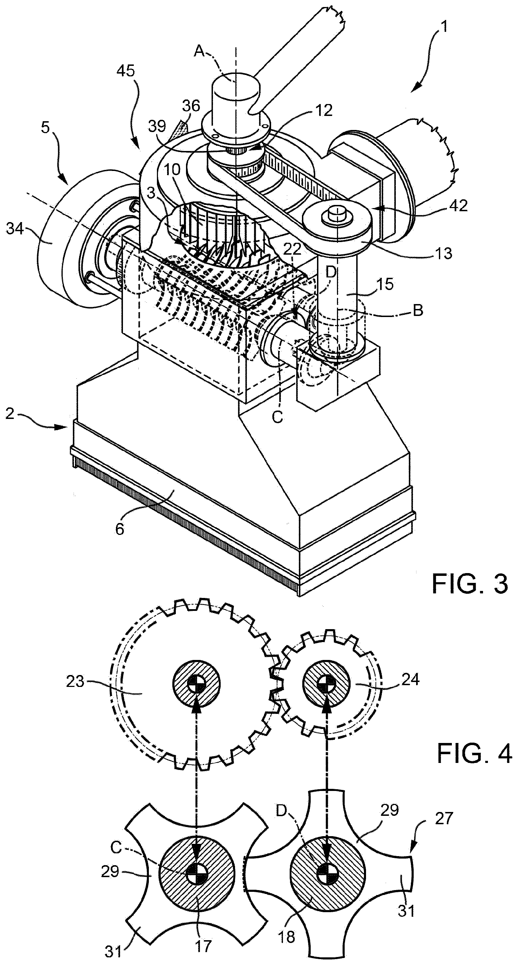

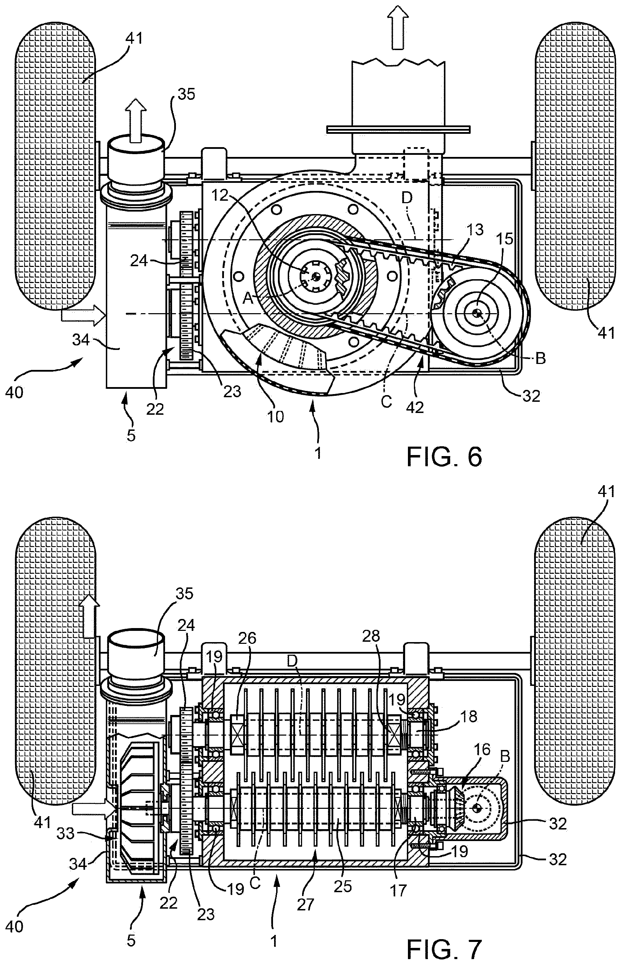

With reference to figures 4 and 7, the blades 27 of the shaft 17 are arranged alternately with the blades of shaft 18, travelling parallel to axes C, D.

In other words, each blade 27 of the shaft 17 is interposed between two respective blades 27 carried by the shaft 18 and consecutive to each other.

The length of the spokes 31 is such that the circular trajectories of the spokes 31 carried by the shaft 17 intersect with the circular trajectories of the spokes carried by the shaft 18.

The shaft 12 and the gears 16, 22 are conveniently enclosed by casings 32, integral to the hood 2, in order to prevent the possible undesirable entry of organic material into them.

The device 1 also comprises a body 45, which houses the fan 10 and the shredder 3, and establishes the aspirating mouth 6 and the drive 12.

In the example shown, the body 45 is formed by the hood 2 and by the casings 32 and by the plate 8.

The blower 5 is positioned outside the body 45.

The blower 5 is integral to the hood 2, for example being fixed thereto by means of a plurality of screws. The blower 5 comprises a blower fan 33 conveniently seated on an extension at the end of the shaft 17 beyond the gear 22 at the axially opposite part of the gear 16, for example by means of a splined connection. The blower 5 also comprises a cylindrical chamber 34 within which the blower fan 33 is enclosed and comprises an outlet mouth 35 tangential to the cylindrical chamber 34 through which a stream of air generated by the blower fan 33 exits. The exit mouth 35 is conveniently connected to a flexible tube 36 (Figure 5) comprising at one of its ends a rigid portion 37 suitable to be used by an operator to direct the flow of air in a desired direction.

As shown in figures 5, 6, 7, the device 1 can be mounted on a support 40, movable by means of a pair of wheels 41 seated on a shaft which is rigidly coupled thereto and can be connected to an output shaft of a traditional brush cutter 30.

The operation of the device 1 is as follows.

The device 1 is suitable to shred the organic material by means of the shredder 3 by being sucked through the hood 2 thanks to the action of the aspirator 4.

With reference to figure 5, an operator, after having connected the shaft 39 of the traditional brush cutter 30 by means of the drive 12 to the device 1 mounted on the wheels 41, pushes the device 1 toward the area where he wants to work.

The drive torque is supplied through the drive 12 which causes rotation of the fan 10 and through the belt 13 to the shaft 15. Rotation of the fan 10 generates a stream of air suction directed substantially parallel to the axis A, passing via the aspirating mouth 6 through the shredder 3 towards the outlet mouth 11.

It should be noted that transmission of torque from the drive 12 between the shredder 3 and the fan 10 is in parallel so that the input torque is conveniently shared between the fan 10 and the shredder 3 via the belt 13.

The shaft 15 transmits the drive to the shaft 17 through the gear 16 and in turn, the shaft 17 transmits the drive through the gear 22 to the shaft 18. The blades 27, being integral with the respective shafts 17, 18 rotate and shred what is passing through them thanks to their offset position with respect to each other and thanks to the intersection of their trajectories and again thanks to different speeds of rotation of the two series of blades which helps the shredding. The shredded material passes through the shredder and is sucked into the container 14 by means of the action of the aspirator 4.

The shaft 17 also drives rotation of the blower fan 33. The blower fan 33 generates a flow of air directed into the flexible tube 36 that is directed by the operator who, using the rigid portion 37 of the tube 36, directs the flow of air to conveniently bring the organic material toward the hood 2.

From the foregoing, there are evident benefits of the device 1 according to the invention.

The device 1 makes it possible to simultaneously perform the organic material shredding and aspirating phases with a considerable saving of time and effort for the operator and without requiring collection of the shredded organic material by manual means or by means external to the device 1.

Thanks to the offset positioning of the blades 27, to the intersection of the trajectories of the spokes 31 and to the different speeds of rotation of the shafts 17 and 18, an optimal shredding of the organic material passing through the hood 2 is obtained in a compact space.

The use of the drive 12 makes it possible to combine the device 1 with brush cutters 30 of known art by simply connecting the output shaft 39 of the brush cutter 30 to the device 1 and removing the traditional shredding blades.

The use of the blower 5, always driven by the input torque from the drive 12, makes it possible to collect organic material relatively far away from the passage of the shredder-aspirator integrated device 1.

Finally, it is clear that the device 1 created according to the present invention may be subject to modifications and variations which however do not depart from the protective scope defined by the claims.

The aspirator 4 could, for example, be replaced by a blowing device suitable to convey the organic material towards the shredding device obtaining the same suction effect through the hood 2.

In this case, the blower device would be interposed along the axis A between the aspirating mouth 6 and the shredder 3, so as to convey the organic material sucked toward the shredder 3 itself.

In addition, the blower 5 may not be present and positioned on the same side of the shaft 15 or seated on the shaft 18. There may also be a tube-holder element integral to the hood 2 to position the flexible tube 36 when not in use.

Finally, the drive 12 may not be connected to the shaft 39, but instead receive the driving torque from a motor, for example of the internal combustion type, separate from the brush cutter 30, or could receive the driving torque from a motor, for example of the electric type, integrated into the device 1.

## Claims

1. A shredder-aspirator integrated device (1) comprising shredding means (3) suitable for shredding organic garden material, comprising:
- an aspirating mouth (6) suitable for aspirating said organic garden material;
- a fan (10) rotational about an axis (A), which can be actuated to generate an air flow suitable for conveying said organic garden material from said aspirating mouth (6) towards said shredding means (3); and
- a drive (12), which can be connected, in use, to a motor (38);
said shredding means (3) and said fan (10) being operatively connected to said drive (12); **characterised in that** it comprises:
- an adjustable blower (5), suitable for conveying said organic material towards said aspirating mouth (6); and
- a body (45), which houses said fan (10) and said shredding means (3), and defines said drive (12) and aspirating mouth (6).

2. A device according to claim 1, **characterised in that** it comprises a transmission assembly (42), which is interposed between said drive (12) and said shredding means (3); said fan (10) being separated from said transmission assembly (42).

3. A device according to claim 1 or 2, **characterised in that** said shredding means (3) comprise a first shaft (17) and a second shaft (18), each of which carries a respective plurality of first and second blades (29) mutually alternating and transversal with respect to the respective said first and second shaft (17, 18); said first and second blades (29) interacting with said organic material to shred it.

4. A device according to claim 3, **characterised in that** said first and second shaft (17, 18) are rotational about respective second axes (C, D), which are transversal to said first axis (A).

5. A device according to claim 4, **characterised in that** said first and second shaft (17, 18) are operatively connected to said drive (12), so as to be rotational about respective second axes (C, D) at a first and second mutually different rotating speed, respectively;
said second rotating speed of said second shaft (18) being faster than said first rotating speed of said first shaft (17).

6. A device according to one of the preceding claims, **characterised in that** said fan (10) is an aspirating fan and is arranged on the opposite side of said shredding means (3) with respect to said aspirating mouth (6), proceeding along said first axis (A).

7. A device according to one of the preceding claims, **characterised in that** said blower (5) comprises a further fan (33) operatively connected to said drive (12).

8. A device according to claim 7, when depending on any other of the claims from 3 to 6, **characterised in that** said further fan (33) is integral with either (17) said first or second shaft (17, 18).

9. A portable assembly comprising:
- a motor (38);
- a device (1) according to any one of the preceding claims; and
- at least one wheel (41) carried by said device (1);
- said drive (12) being connected to said motor (38).

## Patentansprüche

1. Integrierte Zerkleinerungs-Absaugvorrichtung (1), das ein Zerkleinerungsmittel (3) umfasst, das dazu geeignet ist, organisches Gartenmaterial zu zerkleinern, mit:
- einem Absaugmund (6), der dazu geeignet ist, das organische Gartenmaterial abzusaugen;
- einem Flügelrad (10), das um eine Achse (A) drehbar ist und betätigt werden kann, um einen Luftstrom zu erzeugen, der dazu geeignet ist, das organische Gartenmaterial von dem Absaugmund (6) zu dem Zerkleinerungsmittel (3) zu befördern; und
- einem Antrieb (12), der im Betrieb mit einem Motor (38) verbunden werden kann;
wobei das Zerkleinerungsmittel (3) und das Flügelrad (10) operativ mit dem Antrieb (12) verbunden sind;
**dadurch gekennzeichnet, dass** sie umfasst:
- ein einstellbares Gebläse (5), das dazu geeignet ist, das organische Gartenmaterial zu dem Absaugmund (6) zu befördern; und
- einen Körper (45), in dem das Flügelrad (10) und das Zerkleinerungsmittel (3) aufgenommen sind und der den Antrieb (12) und den Absaugmund (6) bildet.

2. Vorrichtung nach Anspruch 1, **dadurch gekennzeichnet, dass** sie eine Antriebsanordnung (42) umfasst, die zwischen dem Antrieb (12) und dem Zerkleinerungsmittel (3) angeordnet ist, wobei das Flügelrad (10) von der Antriebsanordnung (42) getrennt ist.

3. Vorrichtung nach Anspruch 1 oder 2, **dadurch gekennzeichnet, dass** das Zerkleinerungsmittel (3) eine erste Welle (17) und eine zweite Welle (18) umfasst, die jeweils mehrere erste bzw. zweite Messer (29) umfassen, die abwechselnd und quer bezüglich der ersten bzw. zweiten Welle (17, 18) angeordnet sind; wobei die ersten und zweiten Messer (29) mit dem organischen Material zusammenwirken, um es zu zerkleinern.

4. Vorrichtung nach Anspruch 3, **dadurch gekennzeichnet, dass** die erste Welle (17) und zweite Welle (18) um eine jeweilige zweite Achse (C, D) drehbar sind, die quer zu der ersten Achse (A) ist.

5. Vorrichtung nach Anspruch 4, **dadurch gekennzeichnet, dass** die erste Welle (17) und zweite Welle (18) operativ mit dem Antrieb (12) verbunden sind, um so mit einer ersten bzw. einer zweiten Drehzahl, die voneinander verschieden sind, um die jeweilige zweite Achse (C, D) drehbar sind;
wobei die zweite Drehzahl der zweiten Welle (18) höher als die erste Drehzahl der ersten Welle (17) ist.

6. Vorrichtung nach einem der vorherigen Ansprüche, **dadurch gekennzeichnet, dass** das Flügelrad (10) ein Ansaugflügelrad ist und bezüglich des Ansaugmunds (6) auf der dem Zerkleinerungsmittel (3) gegenüberliegenden Seite angeordnet ist, wobei es entlang der ersten Achse (A) vorragt.

7. Vorrichtung nach einem der vorherigen Ansprüche, **dadurch gekennzeichnet, dass** das Gebläse (3) ein weiteres Flügelrad (33) umfasst, das operativ mit dem Antrieb (12) verbunden ist.

8. Vorrichtung nach Anspruch 7, die, wenn sie von einem anderen als den Ansprüchen 3 bis 6 abhängt, **dadurch gekennzeichnet ist, dass** das weitere Flügelrad (33) einteilig mit entweder (17) der ersten oder zweiten (17, 18) Welle ist.

9. Tragbare Anordnung mit:
- einem Motor (38);
- einer Vorrichtung (1) nach einem der vorherigen Ansprüche; und
- wenigstens einem Rad (41), das durch die Vorrichtung (1) gehalten wird;
- wobei der Antrieb (12) mit dem Motor (38) verbunden ist.

## Revendications

1. Un dispositif aspirateur-broyeur intégré (1) comprenant des moyens de broyage (3) appropriés pour le broyage des matières organiques de jardin, comprenant:
- une bouche d'aspiration (6) appropriée pour l'aspiration desdites matières organiques de jardin;
- un ventilateur (10) rotatif autour d'un axe (A), qui peut être actionné pour générer un flux d'air approprié pour convoyer ladite matière organique de jardin depuis ladite bouche d'aspiration (6) vers lesdits moyens de broyage (3); et
- une transmission (12), qui peut être connectée, en utilisation, à un moteur (38);
lesdits moyens de broyage (3) et ledit ventilateur (10) étant connectés de manière opérationnelle à ladite transmission (12);
**caractérisé en ce qu'**il comprend:
- un souffleur ajustable (5), approprié pour transmettre ladite matière organique de jardin vers ladite bouche d'aspiration (6); et
- un corps (45), qui peut accueillir ledit ventilateur (10) et lesdits moyens de broyage (3), et qui définit ladite transmission (12) et la bouche aspirante (6).

2. Un dispositif selon la revendication 1, **caractérisé en ce qu'**il comprend un assemblage de transmission (42), qui est interposé entre ladite transmission (12) et lesdits moyens de broyage (3); ledit ventilateur (10) étant séparé de l'assemblage de transmission (42).

3. Un dispositif selon la revendication 1 ou 2, **caractérisé en ce que** lesdits moyens de broyage (3) comprennent un premier arbre (17) et un second arbre (18), chacun d'eux portant respectivement une pluralité de première et seconde lames (29) mutuellement alternées et transversales par rapport au premier et second arbre (17, 18) ; lesdites première et seconde lames (29) interagissant avec ledit matériau organique pour le broyer.

4. Un dispositif selon la revendication 3, **caractérisé en ce que** lesdits premier et second arbres (17, 18) sont rotatifs par rapport à des seconds axes respectifs (C, D), qui sont transversaux par rapport audit premier axe (A).

5. Un dispositif selon la revendication 4, **caractérisé en ce que** le premier et second arbres (17,18) sont connectés de manière opérationnelle à ladite transmission (12), afin d'être rotatif respectivement par rapport aux second axes (C, D) à une première et seconde vitesse de rotation mutuellement différente, respectivement;
ladite seconde vitesse de rotation dudit second arbre (18) étant plus rapide que ladite première vitesse de rotation du premier arbre (17).

6. Un dispositif selon l'une quelconque des revendications précédentes, **caractérisé en ce que** ledit ventilateur (10) est un ventilateur aspirant et est agencé sur le côté opposé desdits moyens de broyage (3) par rapport à ladite bouche aspirante (6), en considérant ledit premier axe (A).

7. Un dispositif selon l'une quelconque des revendications précédentes, **caractérisé en ce que** ledit souffleur (5) comprend un ventilateur supplémentaire (33) connecté de manière opérationnelle à ladite transmission (12).

8. Un dispositif selon la revendication 7, lorsqu'il dépend d'une revendication autre des revendications 3 à 6, **caractérisé en ce que** ledit ventilateur supplémentaire (33) est intégré avec l'un (17) des premier et second arbres (17, 18).

9. Un assemblage portable comprenant:
- un moteur (38)
- un dispositif (1) selon l'une quelconque des revendications précédentes ; et
- au moins une roue (41) portée par ledit dispositif (1);
- ladite transmission (12) étant connectée audit moteur (38).
